# EUROPEAN PATENT APPLICATION

(11) **EP 2 918 616 A1**
(43) Date of publication of application: **16.09.2015**
(21) Application number: 14160021.3
(22) Date of filing: 14.03.2014
(51) Int. Cl.: C08F 220/18, C08F 220/24

(54) **Photosensitive polymer resin, photosensitive resin composition comprising the same, and layer made therefrom**

(71) Applicant: Solvay SA, 1120 Bruxelles (BE)
(72) Inventor: Kim, Mo-Joon, Gyeonggi-do (KR); Kim, Byeong-Ki, Seoul (KR)
(74) Representative: Mross, Stefan P.M.

(57) **Abstract**

Disclosed in the present invention are photosensitive polymer resins, and photosensitive resin compositions comprising the same, which shows low dielectric constant and therefore can be suitably used as a layer-forming material in electronic devices, in particular in display device.

## Description

### FIELD OF THE INVENTION

The present invention relates to a photosensitive polymer resin, photosensitive resin composition, and a layer made from the photosensitive resin composition suitable for use in electronic devices, in particular display device, such as liquid crystal display (LCD) device and organic light-emitting diode (OLED) device.

### BACKGROUND OF THE INVENTION

Display devices, such as liquid crystal display (LCD) devices, are used for a television, a projector, a mobile phone, a PDA, etc., and such devices usually comprise plural transparent thin layers for various purposes. Some of those layers can be passivation layers which play an important role in protecting thin-film transistor (TFT) in display device, as well as in improving other display performances, such as high contrast ratio, low resistance-capacitance (RC) time delay, high pixel resolution, high aperture ratio, and high brightness.

Conventional materials for forming such passivation layers are inorganic materials, such as silicon oxides and silicon nitrides. However, such inorganic materials intrinsically possess high dielectric constant value (k being up to about 7), and limited transparency when a thick layer is created therefrom, and therefore, high aperture ratio and sufficient RC time delay are not available.

However, the material having a low dielectric constant value (hereinafter often referred to as "low-k material") for the passivation layer reported to date, such as siloxane polymer, benzocyclobutene, and polyimide, are not sufficiently effective because they require high temperature for their processing, and/or they are not photosensitive, and thus, required additional photolithography process in order to form a desired pattern.

Thus, still desired in the art is the low-k material which can be suitably used as the passivation layer in display devices.

### DESCRIPTION OF THE INVENTION

A purpose of the present invention is to provide a low-k material which has excellent photosensitive characteristics. Another purpose of the present invention is to provide a photosensitive low-k material which can be suitably used for the formation of passivation layer in electronic devices.

The present invention therefore relates to photosensitive polymer resins, at least comprising a first (meth)acryl recurring unit (A) comprising at least one acid-labile group, and a second (meth)acryl recurring unit (B) comprising at least one fluorine atom. Indeed, it has been surprisingly found that the acryl-based polymer resin according to the present invention shows satisfactory low dielectric constant value while attaining excellent transparency as well as photosensitive properties required in electronic devices.

Further, the present invention provides photosensitive resin compositions comprising the photosensitive polymer resin according to the present invention, and layers, especially passivation layers, suitable for the use in electronic devices, in particular for the use in display devices, which are prepared from the photosensitive resin composition of the present invention.

### DETAILED DESCRIPTION OF THE INVENTION

In the present invention, "alkyl group" is understood to denote in particular a straight chain, branched chain, or cyclic hydrocarbon group usually having from 1 to 20 carbon atoms. Examples of alkyl group include methyl, ethyl, propyl, isopropyl, butyl, isobutyl, sec-butyl, tert-butyl, pentyl, neopentyl, hexyl, cyclopropyl, cyclobutyl, cyclopentyl, and cyclohexyl. The alkyl group having 1 to 3 carbon atoms is particularly preferred in the present invention.

In the present invention, "alkoxy group" is understood to denote in particular a straight chain, branched chain, or cyclic hydrocarbon group usually having from 1 to 20 carbon atoms, preferably from 1 to 8 carbon atoms, more preferably from 1 to 3 carbon atoms, singularly bonded to oxygen (Alk-O-).

In the present invention, "aryl group" is understood to denote in particular any functional group or substituent derived from an aromatic ring. In particular, the aryl groups can have 5 to 20 carbon atoms preferably 6 to 12 carbon atoms, in which some or all of the hydrogen atoms of the aryl group may or may not be substituted with other groups. The aryl groups are preferably optionally substituted phenyl groups, naphthyl groups, anthryl group and phenanthryl group.

In the present invention, "amine group" is understood to denote in particular aliphatic amine or aromatic amine and encompass compounds comprising one or multiple amino groups. The amino group can be primary amines, secondary amines and tertiary amines, wherein one or more hydrogen atoms may or may not be independently substituted with other groups.

In the present invention, "fluorinated" is understood to denote in particular at least one of the hydrogen atoms of the following chemical group has been replaced by fluorine atom. If all of the hydrogen atoms have been replaced by fluorine atoms, the fluorinated chemical group can be also called "perfluorinated." For instance, "fluorinated alkyl group" include (per)fluorinated alkyl group, such as (per)fluorinated methyl, ethyl, propyl, isopropyl, butyl, isobutyl, sec-butyl or *tert*-butyl ; and for instance -CF₃, -C₂F₅, heptafluoroisopropyl (-CF(CF₃)₂), hexafluoroisopropyl (-CH(CF₃)₂) or -CF₂(CF₂)₄CF₃. Non-limiting example of "fluorinated aryl group" include -C₆F₅.

In the present invention, "(meth)acrylic recurring unit" is understood to denote in particular any recurring unit derived from (meth)acrylic monomer for a formation of polymer. In the present invention, "(meth)acrylic recurring unit" is preferably obtainable, more preferably obtained from (meth)acrylic monomer.

In the present invention, the first (meth)acrylic recurring unit (A) comprises at least one acid-labile group. This recurring unit (A) is primarily intended to impart satisfactory photosensitive properties to the resin as it possesses at least one acid-labile group, yet its intended function is not necessarily limited thereto.

In the present invention, the acid-labile group is understood to denote in particular a group which is detached upon its reaction with acid, the acid which may be generated in particular from a photo-acid generator upon an irradiation of light thereto, therefore altering the solubility of a resin. In the present invention, the acid-labile group functions to cause a change in the solubility particularly to a developer solution for photo-processing, more particularly to alkali compounds, such as KOH, NaOH, tetramethyl ammonium hydroxide (TMAH), and tetraethyl ammonium hydroxide (TEAH), thereby forming a desired pattern by a selective irradiation of light via suitable patterning means, such as mask.

Examples of the acid-labile group include acid-labile acetal protection group described in Korean patent application publication No. 10-2010-0009801, those described in PCT international publication No. WO 2012/125009, tetrahydropyranyl group described in US 20110117332 A, and those described in US 6232417 B, but the present invention is not limited thereto.

In the present invention, the acid-labile group is preferably selected from the following structure :

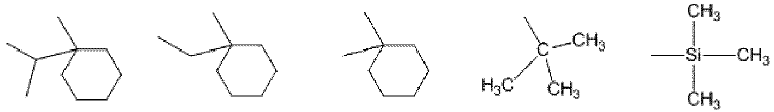

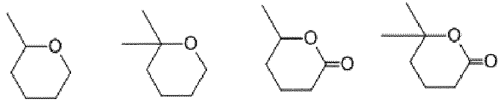

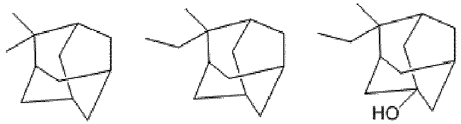

In the present invention, the first (meth)acrylic recurring unit (A) preferably complies with formula (I-1) or (1-2) below :

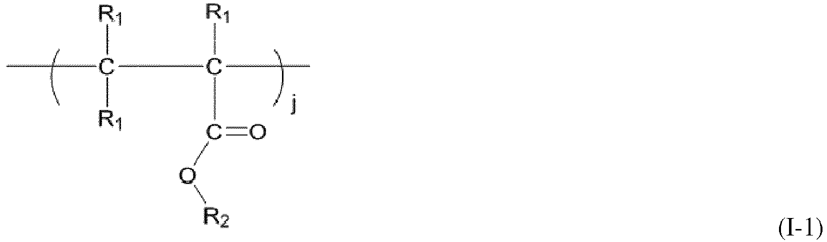

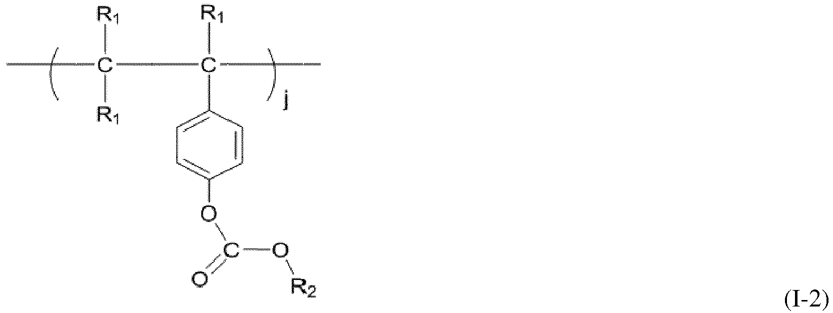

In formulae (I-1) and (1-2), R₁ is independently selected from hydrogen, alkyl group, and fluorinated alkyl group, in particular selected from -H, -CH₃, -C₂H₅, -F, -CF₃, and -C₂F₅, R₂ is an acid-labile group as defined in the above, and j denotes mole % of the first (meth)acrylic recurring unit (A) in the photosensitive polymer resin. In the present invention, j is preferably at least 20 % by mole and no more than 85 % by mole. Without wishing to be bound by any theory, it is believed that good results in terms of sensitivity and solubility as well as dielectric constant value can be obtained in the specified range.

The photosensitive polymer resin according to the present invention, in addition to the first (meth)acrylic recurring unit (A), at least comprises a second (meth)acrylic recurring unit (B) comprising at least one fluorine atom. One or more fluorine atoms may be present in one or more substituent attached to a backbone and/or a side chain of the recurring unit (B). In other words, a (meth)acrylic monomer for the second (meth)acrylic recurring unit (B) can be at least one selected from fluoro-(meth)acrylic monomer, (meth)acrylic monomer carrying fluorine or fluorinated groups (e.g., fluorinated alkyl and fluorinated aryl groups), and fluoro-(meth)acrylic monomer carrying fluorine or fluorinated groups. The (meth)acrylic recurring unit (B) preferably comprises at least one partially fluorinated or perfluorinated alkyl or aryl group in its side chain. The recurring unit (B) is primarily intended to impart excellent low dielectric constant to the resin, yet its intended function is not necessarily limited thereto.

In the present invention, the (meth)acrylic monomer for the second (meth)acrylic recurring unit (B) is preferably selected from the group consisting of 1,1,1,3,3,3-hexafluoroisopropyl acrylate, 1H,1H,2H,2H-heptadecafluorodecyl acrylate, 1H,1H,2H,2H-heptadecafluorodecyl methacrylate, 1H,1H,3H-hexafluorobutyl acrylate, 1H,1H,3H-hexafluorobutyl methacrylate, 1H,1H,3H-tetrafluoropropyl methacrylate, 1H,1H,5H-octafluoropentyl acrylate, 1H, 1H,5H-octafluoropentyl methacrylate, 1H, 1H,7H-dodecafluoroheptyl methacrylate, 1H,1H-heptafluorobutyl acrylate, 2,2,2-trifluoroethyl acrylate, 2,2,2-trifluoroethyl methacrylate, bis-(1,1,1,3,3,3-hexafluoroisopropyl) itaconate, bis-(2,2,2-trifluoroethyl) itaconate, hexafluoro-isopropyl methacrylate, pentafluorophenyl acrylate, pentafluorophenyl methacrylate, 2,2,3,3,4,4,5,5,6,6,7,7-dodecafluoroheptyl acrylate, 4,4,5,5,6,6,7,7,8,9,9,9-dodecafluoro-2-hydroxy-8-(trifluoromethyl)nonyl methacrylate, 3,3,4,4,5,5,6,6,7,7,8,8,9,9,10,10,11,12,12,12-eicosafluoro-11-(trifluoromethyl)dodecyl methacrylate, 3,3,4,4,5,5,6,6,7,7,8,8,9,9,10,10,11,11,12,12,12-heneicosafluorododecyl acrylate, 3,3,4,4,5,5,6,6,7,7,8,8,9,9,10,10,11,11,12,12,12-heneicosafluorododecyl methacrylate, 2,2,3,3,4,4,4-heptafluorobutyl methacrylate, 4,4,5,5,6,6,7,7,8,8,9,9,10,11,11,11-hexadecafluoro-2-hydroxy-10-(trifluoromethyl)undecyl methacrylate, 3,3,4,4,5,5,6,6,7,7,8,8,9,10,10,10-hexadecafluoro-9-(trifluoromethyl)decyl acrylate, 3,3,4,4,5,5,6,6,7,7,8,8,9,10,10,10-hexadecafluoro-9-(trifluoromethyl)decyl methacrylate, 4,4,5,5,6,7,7,7-octafluoro-2-hydroxy-6-(trifluoromethyl)heptyl methacrylate, 2,2,3,3,3-pentafluoropropyl acrylate, 2,2,3,3,3-pentafluoropropyl methacrylate, 1H,1H,2H,2H-perfluorodecyl acrylate, 4,4,5,5,6,6,7,7,8,8,9,9,9-tridecafluoro-2-hydroxynonyl acrylate, 3,3,4,4,5,5,6,6,7,7,8,8,8-tridecafluorooctyl acrylate, 3,3,4,4,5,5,6,6,7,7,8,8,8-tridecafluorooctyl methacrylate, 1,1,1-trifluoro-2-(trifluoromethyl)-2-hydroxy-4-methyl-5-pentyl methacrylate, and 2-[(1',1',1'-trifluoro-2'-(trifluoromethyl)-2'-hydroxy)propyl]-3-norbornyl methacrylate, but the present invention is not limited thereto.

In the present invention, the second (meth)acrylic recurring unit (B) preferably complies with the formula (II-1), (11-2), (11-3), or (II-4) below :

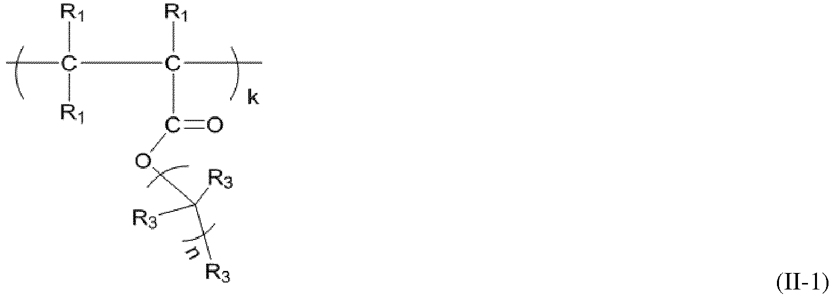

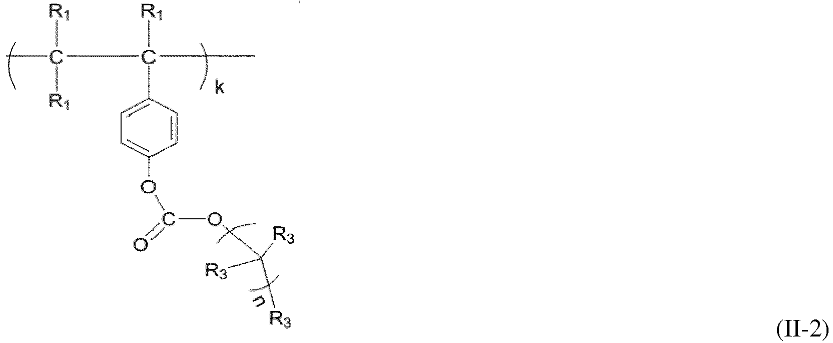

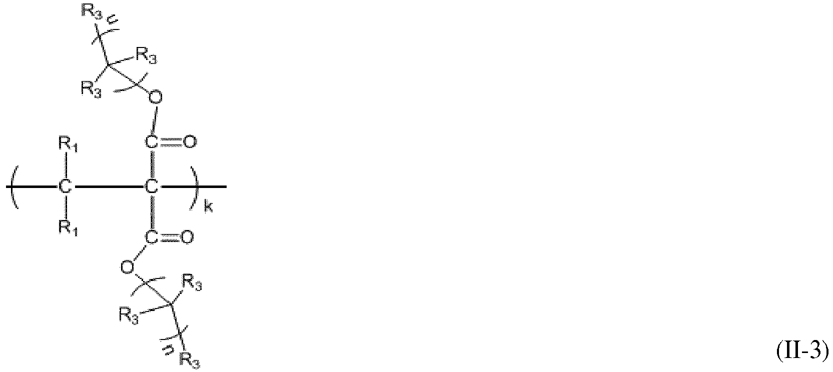

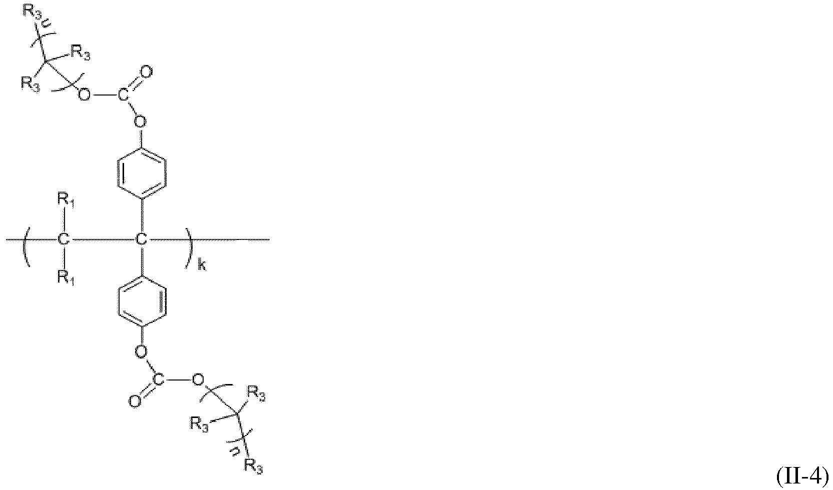

In formulae (II-1), (11-2), (11-3), and (11-4), R₁ and R₃ are independently selected from hydrogen, alkyl group, and fluorinated alkyl group, in particular selected from -H, -CH₃, -C₂H₅, -F, -CF₃, and -C₂F₅, with the proviso that at least one R₃ comprises at least one fluorine atom, k denotes mole % of the second (meth)acrylic recurring unit (B) in the photosensitive polymer resin, and n is an integer from 1 to 15.

In the present invention, k is preferably at least 10 % by mole and no more than 75 % by mole. Without wishing to be bound by any theory, it is believed that desirable low dielectric constant can be obtained along with other required characteristics in the specified range.

The photosensitive polymer resin according to the present invention may further comprise a third (meth)acrylic recurring unit (C). The third (meth)acrylic recurring unit (C) comprises at least one reactive functional group. In the present invention, "reactive functional group" is understood to denote in particular a chemical group which can be cross-linked with other components, such as other monomers and additives, in polymer resin and/or its composition, thusly imparting a thermal stability and/or an enhanced adhesion to an underlying layer to the polymer resin and/or its composition. Such reactive functional group can be selected from the group consisting of hydroxyl group, carboxyl group, epoxy group, thiol group, amine group, isocyanate group, urethane group, and alkoxysilane group, but the present invention is not limited thereto.

In the present invention, the reactive functional group is preferably selected from the following structure :

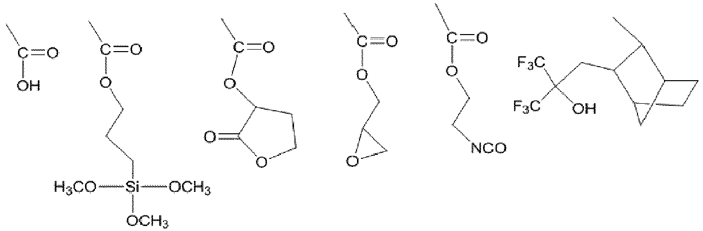

In the present invention, the third (meth)acrylic recurring unit (C) preferably complies with the formula (III) below :

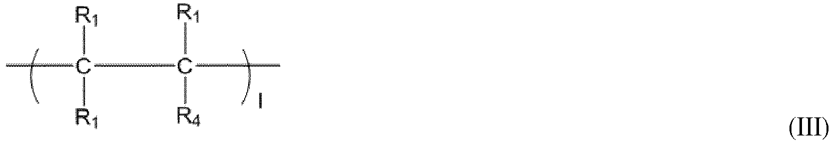

In formula (III), R₁ is independently selected from hydrogen, alkyl group, and fluorinated alkyl group, in particular selected from -H, -CH₃, -C₂H₅, -F,-CF₃, and -C₂F₅, R₄ is reactive functional group selected from the following structure, and 1 denotes mole % of the third (meth)acrylic recurring unit (C) in the photosensitive polymer resin.

In the present invention, 1 is preferably at least 5 % by mole and no more than 70 % by mole. Without wishing to be bound by any theory, it is believed that desirable thermal stability as well as adhesion to an underlying layer can be obtained in the specified range.

The photosensitive polymer resin according to the present invention is generally prepared by polymerizing the above-explained monomers optionally with other components, usually in presence of solvent by known polymerization means the art, preferably by using a radical polymerization method.

The prepared photosensitive polymer resin preferably has a weight-average molecular weight of from 5,000 to 50,000 g/mol, and a molecular weight distribution (weight-average molecular weight/number-average molecular weight) of from 1.0 to 4.0. In the present invention, the weight-average molecular weight (Mw) and the number-average molecular weight of the polymeric material are obtained by a gel permeation chromatography (GPC) in tetrahydrofuran (THF), calibrated using a polystyrene standard.

A desired low dielectric constant value (k) can be attained by the photosensitive polymer resin according to the present invention. In particular, k value intended in the present invention can be as low as equal to or less than 3. For instance, a material having such low k value for the purpose of passivation layer in display device is described in Ji-Hoon Oh et al. ("Highly Condensed Fluorinated Methacrylate Hybrid Material for Transparent Low-k Passivation Layer in LCD-TFT," American Chemical Society 2010, Applied Materials & Interfaces, Vol. 2, No. 3, p. 913-918) which suggests the application of a particular fluorinated methacrylate oligosiloxane (or a fluorinated methacrylate hybrid material (FM hybrimer)) as a low-k passivation layer in LCD, with a dielectric constant thereof being reported to be as low as k = 2.54. Also, excellent pattern characteristics can be attained by using the photosensitive polymer resin according to the present invention.

Another aspect of the present invention concerns photosensitive resin compositions comprising
(i) at least one photosensitive polymer resin according to the present invention,
(ii) at least one photo-acid generator (PAG),
(iii) at least one solvent, and
(iv) optionally, at least one additive.

In the present invention, an amount of the photosensitive polymer resin according to the present invention in the composition can be from 5 to 50 wt %, preferably from 10 to 30 wt % relative to the total weight of the photosensitive resin composition.

In the present invention, "photo-acid generator (PAG)" is understood to denote in particular a chemical compound which produces acids upon an irradiation of light, which preferably does not deteriorate other properties, such as transparency.

In the present invention, PAG can be diazonium salts, phosphonium salts, sulfonium salts, iodonium salts, imide sulfonates, oxime sulfonates, diazo disulfones, disulfones, ortho-nitrobenzyl sulfonates, and triazines. Combination of more than one PAG can be used in the present invention. Examples of PAG can be also found in Korean patent application publication No. 10-2010-0009801, PCT international publication No. WO 2012/125009, and US 20110117332 A, which are incorporated by reference in the present invention.

In the present invention, the PAG is preferably selected from the group consisting of triarylsulfonium salt, diaryliodonium salt, triphenylsulfonium triflate, (4-methoxyphenyl)diphenylsulfonium triflate, triphenylsulfonium antimonate, diphenyliodonium triflate, diphenyliodonium antimonate, methoxydiphenyliodonium triflate, di-t-butyliodonium triflate, N-hydroxynaphthalimide triflate, 2,6-dinitrobenzyl sulfonate, pyrogallol tris(alkylsulfonate), and succinimidyl triflate.

In the present invention, an amount of PAG can be from 0.01 to 10 wt %, preferably from 1 to 5 wt % relative to the total weight of the photosensitive resin composition. Desired rate for developing process as well as good pattern profile can be obtained in the specified range.

In the present invention, any one or combination of alcohol, acetate, ether, glycol, ketone, and carbonate type solvent can be used. Organic solvent is preferred. Preferred examples of the solvent include N-methyl-2-pyrrolidone, N,N-dimethylformamide, N,N-dimethylacetamide, dimethylsulfoxide, diethylacetamide, gamma-butyrolactone ketone, gamma-valerolactone ketone, m-cresol, ethyleneglycol monomethylether, ethyleneglycol monomethylether acetate, ethyleneglycol monoethylether, ethyleneglycol monoethylether acetate, ethyleneglycol monobutylether, ethyleneglycol monobutylether acetate, propyleneglycol monomethylether, propyleneglycol monomethylether acetate, propyleneglycol monoethylether, propyleneglycol monoethylether acetate, propyleneglycol monopropylether, propyleneglycol monopropylether acetate, propyleneglycol monobutylether, propyleneglycol monobutylether acetate, propyleneglycol dimethylether, propyleneglycol diethylether, propyleneglycol dipropylether, propyleneglycol dibutylether, ethyl lactate, butyl lactate, cyclohexanone, and cyclopentanone. Use of propyleneglycol monomethylether acetate in combination with other one or more organic solvents is particularly preferred for the photosensitive resin composition according to the present invention.

In the present invention, an amount of the solvent can be from 40 to 94.09 wt %, preferably from 65 to 89 wt % relative to the total weight of the photosensitive resin composition. Desired viscosity and coatability can be available in the specified range.

The photosensitive resin composition according to the present invention may further comprise one or more additives used in the art for the purpose of improving desired properties.

Examples of such additive include heat stabilizer, antioxidant, light stabilizer, photo-curing accelerator, adhesion promoter, leveling agent, defoamer, and cross-linking agent.

A particular additive which can be used in the present invention is an acid diffusion controlling agent which is generally used when the control of diffusion of acid generated from PAG is required. Basic compounds, such as amines, can be used in this context. In the present invention, one or more amines selected from triethylamine, tripropyl amine, tribenzyl amine, trihydroxyethyl amine, and ethylene diamine are preferably used. An amount of the acid diffusion controlling agent can be from 0.01 to 5 wt %, preferably from 0.1 to 2 wt % relative to the total weight of the photosensitive resin composition.

Another particular additive which can be used in the photosensitive resin composition according to the present invention is a surfactant. The surfactant can improve coatability, and makes attain uniform thickness, by enhancing wetting performance between the photosensitive resin composition and an underlying layer. In the present invention, the surfactant can be fluorine type, silicon type, and acryl type as known in the art, and is preferably at least one selected from the group consisting of polyoxyethylene lauryl ether, polyoxyethylene stearyl ether, polyoxyethylene oleyl ether, polyoxyethylene octyl phenol ether, polyoxyethylene nonyl phenol ether, and polyethyleneglycol dilaurate. An amount of the surfactant can be 0.01 to 5 wt %, preferably from 0.1 to 2 wt % relative to the total weight of the photosensitive resin composition.

The photosensitive resin composition according to the present invention can be suitably used as the low-k material for forming a layer, in particular a passivation layer, in electronic devices, such as semiconductor devices, and display devices, especially LCD or OLED device containing TFT. Accordingly, a further aspect of the present invention concerns layers obtainable by using the photosensitive resin composition according to the present invention. The layer of the present invention is preferably obtained from the photosensitive resin composition according to the present invention.

In a particular embodiment of the present invention, the layer according to the present invention functions as a passivation layer in electronic devices, in particular in display devices.

The layer can be formed by applying the photosensitive resin composition of the present invention on an underlying layer. Such application can be brought about for example using laser etching, wetting, such as dipping, printing, such as gravure printing and inkjet printing, coating, such as spin coating, bar coating, slit coating, spray coating, roll coating, and spreading, or deposition. After applying the photosensitive resin composition on the underlying layer, the layer according to the present invention can be formed for example by applying heat to remove the solvent. Typical temperatures for the heat application are from 80 to 150°C, preferably 100 to 130°C. Typical heat application time is from 1 to 30 min, preferably 2 to 10 min.

A pattern can be obtained on thusly-obtained layer. By way of example, in order to obtain such pattern, at least one portion of the layer may be subject to an exposure of light irradiation via a mask having a desired pattern. In one embodiment of the present invention, solubility of the exposed portion is modified, and thus, such portion can be easily removed by applying developer solution, such as alkali solution, thereby forming the intended pattern, yet the present invention is not limited to this embodiment. Excellent pattern having an good resolution, such as the resolution of no more than 10 µm, preferably no more than 5 µm, can be attained in accordance with the present invention.

A still further aspect of the present invention concerns electronic devices, at least comprising the layer according to the present invention. Representative examples of the electronic device in the present invention include semiconductor devices, and display devices, such as LCD and OLED, especially LCD device.

While preferred embodiments of this invention have been shown and described, modifications thereof can be made by one skilled in the art without departing from the spirit or teaching of this invention. The embodiments and examples described herein are exemplary only and are not limiting. Many variations and modifications of systems and methods are possible and are within the scope of the invention. Accordingly, the scope of protection is not limited to the embodiments described herein, but is only limited by the claims that follow, the scope of which shall include all equivalents of the subject matter of the claims.

The following examples illustrate the invention in further detail without however limiting it.

### Examples

### Example 1 : Preparation of photosensitive polymer resin 1

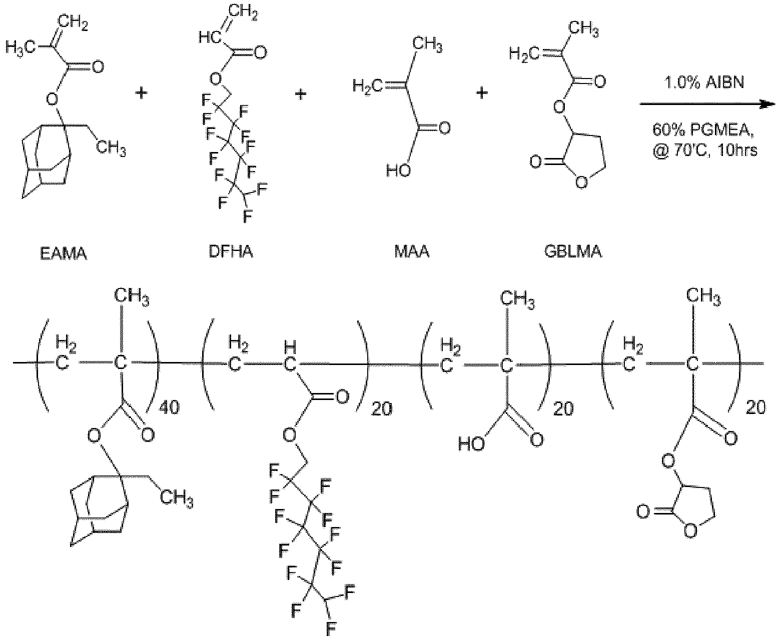

4 different kinds of acrylic monomers, namely 2-ethyl-2-adamantylmethacrylate (EAMA) 100 g, 2,2,3,3,4,4,5,5,6,6,7,7-dodecafluoroheptyl acrylate (DFHA) 77.73 g, methacrylic acid (MAA) 17.33 g, and butyrolactone methacrylate (GBLMA) 34.26 g (molar ratio = 40:20:20:20) were introduced into 1L flask reactor in propyleneglycol monomethylether acetate (PGMEA) 343.97 g so as to make its solid content being 40 %, and heated until 70°C by stirring while introducing nitrogen gas. When the temperature reached 70°C, azobisisobutyronitrile (AIBN) 1.65 g (heat radical initiator) was introduced thereto, and stirred for 10 hours. Upon a completion of the reaction, it was slowly cooled down at room temperature, precipitated in methanol solution, and dried overnight at 50°C in vacuum oven, obtaining the photosensitive polymer resin 1 as a powder.

### Example 2 : Preparation of photosensitive resin composition 1

The powder obtained in Example 1 100 g (photosensitive polymer resin 1), (4-phenylthiophenyl)diphenylsulfonium triflate 4 g (PAG), polyethyleneglycol dilaurate 2 g (surfactant), triethylamine 2 g (acid diffusion controlling agent), and propyleneglycol monomethylether acetate (PGMEA) 333 g were mixed and stirred overnight at room temperature, and then filtered with 0.45 µm Teflon filter, thereby obtaining a photosensitive resin composition 1.

## Claims

1. A photosensitive polymer resin, at least comprising a first (meth)acrylic recurring unit (A) comprising at least one acid-labile group, and a second (meth)acrylic recurring unit (B) comprising at least one fluorine atom.

2. The photosensitive polymer resin according to claim 1, wherein a (meth)acrylic monomer for the second (meth)acrylic recurring unit (B) is selected from the group consisting of 1,1,1,3,3,3-hexafluoroisopropyl acrylate, 1H,1H,2H,2H-heptadecafluorodecyl acrylate, 1H,1H,2H,2H-heptadecafluorodecyl methacrylate, 1H,1H,3H-hexafluorobutyl acrylate, 1H,1H,3H-hexafluorobutyl methacrylate, 1H,1H,3H-tetrafluoropropyl methacrylate, 1H,1H,5H-octafluoropentyl acrylate, 1H,1H,5H-octafluoropentyl methacrylate, 1H,1H,7H-dodecafluoroheptyl methacrylate, 1H,1H-heptafluorobutyl acrylate, 2,2,2-trifluoroethyl acrylate, 2,2,2-trifluoroethyl methacrylate, bis-(1,1,1,3,3,3-hexafluoroisopropyl) itaconate, bis-(2,2,2-trifluoroethyl) itaconate, hexafluoro-isopropyl methacrylate, pentafluorophenyl acrylate, pentafluorophenyl methacrylate, 2,2,3,3,4,4,5,5,6,6,7,7-dodecafluoroheptyl acrylate, 4,4,5,5,6,6,7,7,8,9,9,9-dodecafluoro-2-hydroxy-8-(trifluoromethyl)nonyl methacrylate, 3,3,4,4,5,5,6,6,7,7,8,8,9,9,10,10,11,12,12,12-eicosafluoro-11-(trifluoromethyl)dodecyl methacrylate, 3,3,4,4,5,5,6,6,7,7,8,8,9,9,10,10,11,11,12,12,12-heneicosafluorododecyl acrylate, 3,3,4,4,5,5,6,6,7,7,8,8,9,9,10,10,11,11,12,12,12-heneicosafluorododecyl methacrylate, 2,2,3,3,4,4,4-heptafluorobutyl methacrylate, 4,4,5,5,6,6,7,7,8,8,9,9,10,11,11,11-hexadecafluoro-2-hydroxy-10-(trifluoromethyl)undecyl methacrylate, 3,3,4,4,5,5,6,6,7,7,8,8,9,10,10,10-hexadecafluoro-9-(trifluoromethyl)decyl acrylate, 3,3,4,4,5,5,6,6,7,7,8,8,9,10,10,10-hexadecafluoro-9-(trifluoromethyl)decyl methacrylate, 4,4,5,5,6,7,7,7-octafluoro-2-hydroxy-6-(trifluoromethyl)heptyl methacrylate, 2,2,3,3,3-pentafluoropropyl acrylate, 2,2,3,3,3-pentafluoropropyl methacrylate, 1H,1H,2H,2H-perfluorodecyl acrylate, 4,4,5,5,6,6,7,7,8,8,9,9,9-tridecafluoro-2-hydroxynonyl acrylate, 3,3,4,4,5,5,6,6,7,7,8,8,8-tridecafluorooctyl acrylate, 3,3,4,4,5,5,6,6,7,7,8,8,8-tridecafluorooctyl methacrylate, 1,1,1-trifluoro-2-(trifluoromethyl)-2-hydroxy-4-methyl-5-pentyl methacrylate, and 2-[(1',1',1'-trifluoro-2'-(trifluoromethyl)-2'-hydroxy)propyl]-3-norbornyl methacrylate.

3. The photosensitive polymer resin according to claim 1 or 2, wherein the acid-labile group is selected from the following structure :

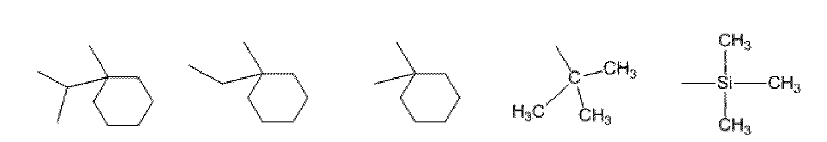

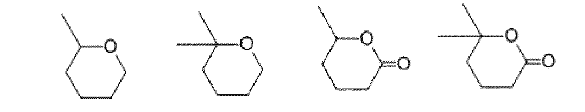

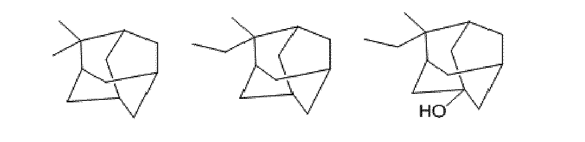

4. The photosensitive polymer resin according to any one of claims 1 to 3, further comprising a third (meth)acrylic recurring unit (C) comprising at least one reactive functional group selected from the group consisting of hydroxyl group, carboxyl group, epoxy group, thiol group, amine group, isocyanate group, urethane group, and alkoxysilane group.

5. The photosensitive polymer resin according to claim 4, wherein the reactive functional group is selected from the following structure :

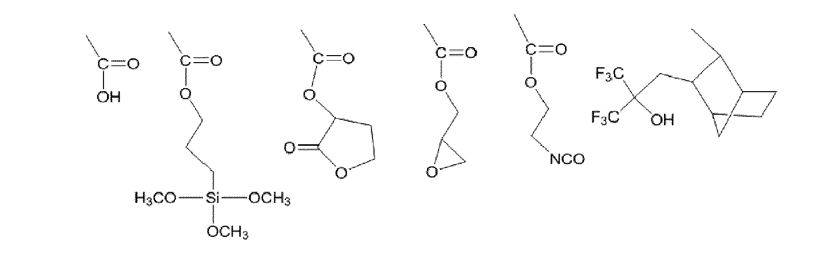

6. The photosensitive polymer resin according to any one of claims 1 to 5, wherein the first (meth)acrylic recurring unit (A) complies with formula (I-1) or (1-2) below : 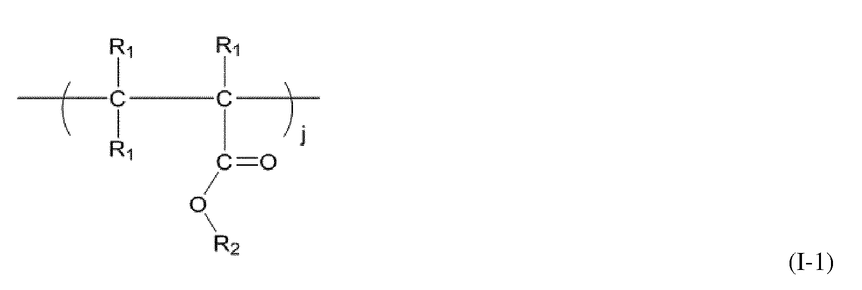 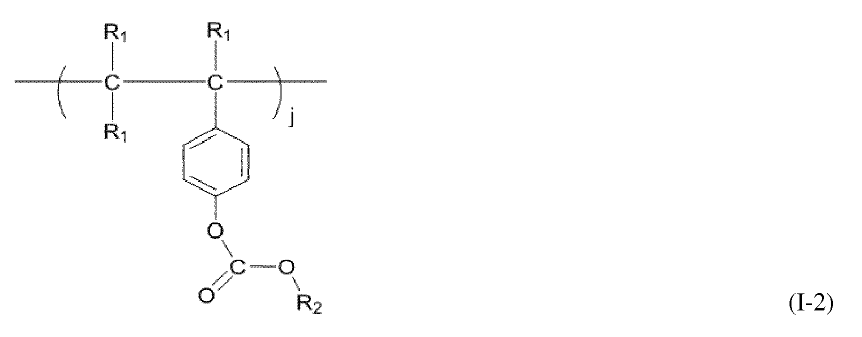 wherein R₁ is independently selected from hydrogen, alkyl group, and fluorinated alkyl group, in particular selected from -H, -CH₃, -C₂H₅, -F, -CF₃, and -C₂F₅, R₂ is an acid-labile group, and j denotes mole % of the first (meth)acrylic recurring unit (A) in the photosensitive polymer resin and is at least 20 % by mole and no more than 85 % by mole.

7. The photosensitive polymer resin according to claims 1 to 6, wherein the second (meth)acrylic recurring unit (B) complies with the formula (II-1), (11-2), (11-3), or (II-4) below : 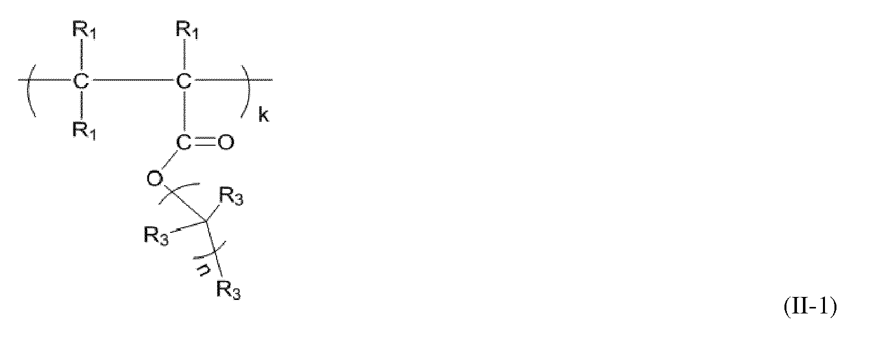 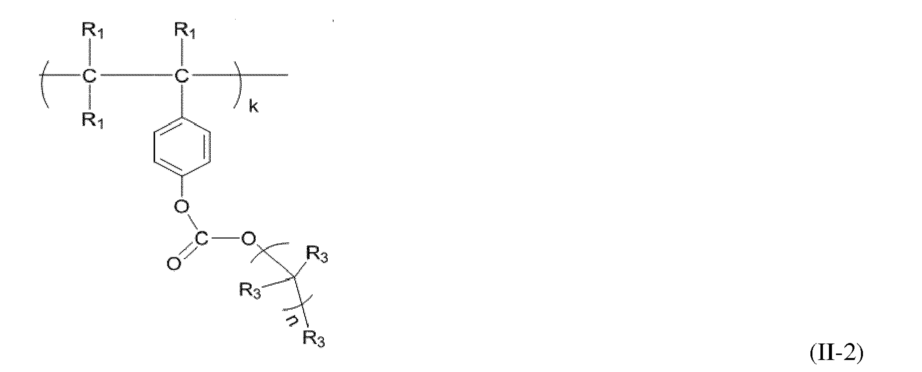 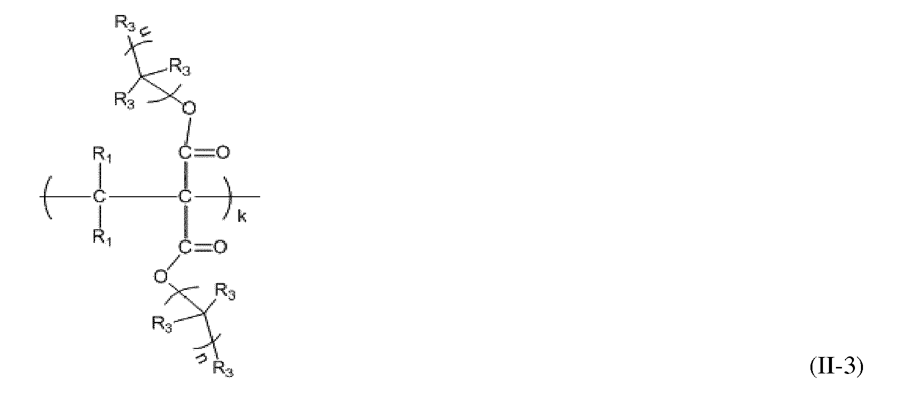 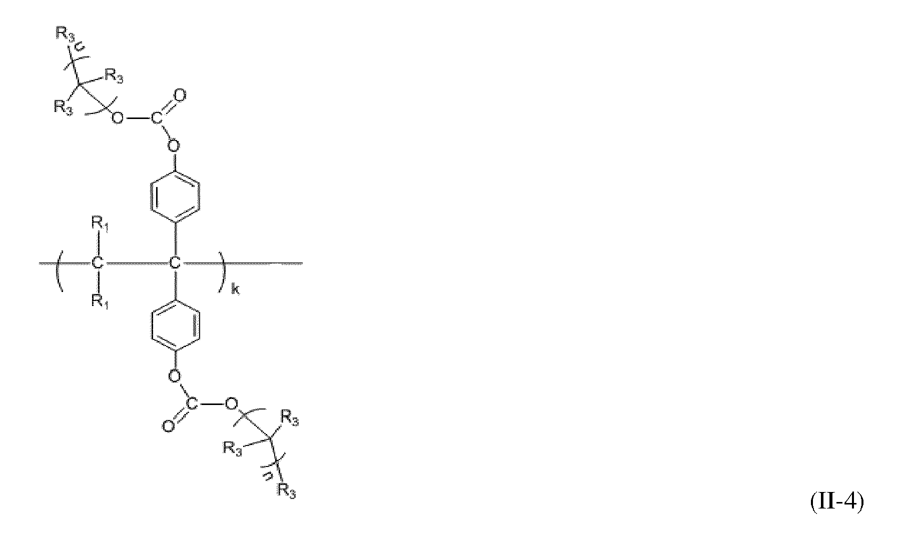 wherein R₁ and R₃ are independently selected from hydrogen, alkyl group, and fluorinated alkyl group, in particular selected from -H, -CH₃, -C₂H₅, -F, -CF₃, and -C₂F₅, provided at least one R₃ comprises at least one fluorine atom, k denotes mole % of the second (meth)acrylic recurring unit (B) in the photosensitive polymer resin and is at least 10 % by mole and no more than 75 % by mole, and n is an integer from 1 to 15.

8. The photosensitive polymer resin according to any one of claims 4 to 7, wherein the third (meth)acrylic recurring unit (C) complies with the formula (III) below : 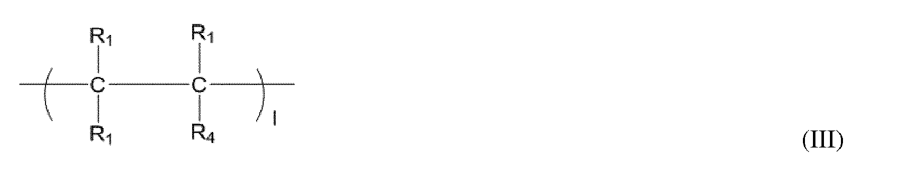 wherein R₁ is independently selected from hydrogen, alkyl group, and fluorinated alkyl group, in particular selected from -H, -CH₃, -C₂H₅, -F, -CF₃, and -C₂F₅, R₄ is reactive functional group selected from the following structure, and 1 denotes mole % of the third (meth)acrylic recurring unit (C) in the photosensitive polymer resin and is at least 5 % by mole and no more than 70 % by mole.

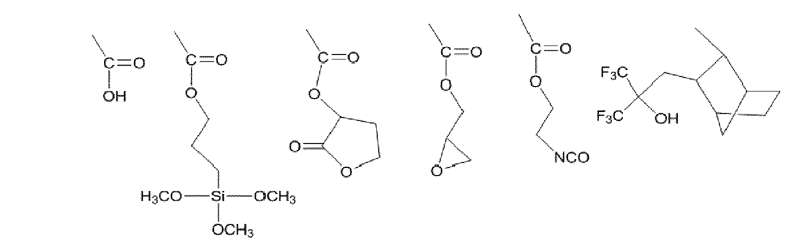

9. The photosensitive polymer resin according to any one of claims 1 to 8, wherein a weight-average molecular weight of the photosensitive polymer resin is from 5,000 to 50,000 g/mol, and a molecular weight distribution (weight-average molecular weight/number-average molecular weight) of the photosensitive polymer resin is from 1.0 to 4.0.

10. A photosensitive resin composition comprising :
(i) at least one photosensitive polymer resin according to any one of claims 1 to 9,
(ii) at least one photo-acid generator (PAG),
(iii) at least one solvent, and
(iv) optionally, at least one additive.

11. The photosensitive resin composition according to claim 10, wherein the PAG is selected from the group consisting of triarylsulfonium salt, diaryliodonium salt, triphenylsulfonium triflate, (4-methoxyphenyl)diphenylsulfonium triflate, triphenylsulfonium antimonate, diphenyliodonium triflate, diphenyliodonium antimonate, methoxydiphenyliodonium triflate, di-t-butyliodonium triflate, N-hydroxynaphthalimide triflate, 2,6-dinitrobenzyl sulfonate, pyrogallol tris(alkylsulfonate), and succinimidyl triflate.

12. The photosensitive resin composition according to claim 10 or 11, wherein the solvent is selected from the group consisting of N-methyl-2-pyrrolidone, N,N-dimethylformamide, N,N-dimethylacetamide, dimethylsulfoxide, diethylacetamide, gamma-butyrolactone ketone, gamma-valerolactone ketone, m-cresol, ethyleneglycol monomethylether, ethyleneglycol monomethylether acetate, ethyleneglycol monoethylether, ethyleneglycol monoethylether acetate, ethyleneglycol monobutylether, ethyleneglycol monobutylether acetate, propyleneglycol monomethylether, propyleneglycol monomethylether acetate, propyleneglycol monoethylether, propyleneglycol monoethylether acetate, propyleneglycol monopropylether, propyleneglycol monopropylether acetate, propyleneglycol monobutylether, propyleneglycol monobutylether acetate, propyleneglycol dimethylether, propyleneglycol diethylether, propyleneglycol dipropylether, propyleneglycol dibutylether, ethyl lactate, butyl lactate, cyclohexanone, and cyclopentanone.

13. The photosensitive resin composition according to any one of claims 10 to 12, wherein the additive comprises at least one acid diffusion controlling agent, preferably selected from the group consisting of triethylamine, tripropyl amine, tribenzyl amine, trihydroxyethyl amine, and ethylene diamine.

14. A layer obtainable by using the photosensitive resin composition according to any one of claims 1 to 13.

15. An electronic device, at least comprising the layer according to claim 14.
